# EUROPÄISCHE PATENTSCHRIFT

(11) **EP 3 590 279 B1**
(45) Veröffentlichungstag und Bekanntmachung des Hinweises auf die Patenterteilung: **27.04.2022**
(21) Anmeldenummer: 18714172.6
(22) Anmeldetag: 14.03.2018
(51) Int. Cl.: H04W 12/06, G05B 19/00

(54) **VERFAHREN, SYSTEM UND ANWENDUNGSPROGRAMM ZUR ZUORDNUNG VON INDUSTRIELLEN FELDGERÄTEN IN EINER CLOUD-UMGEBUNG**
METHOD, SYSTEM AND APPLICATION PROGRAM FOR THE ASSIGNMENT OF INDUSTRIAL FIELD DEVICES IN A CLOUD ENVIRONMENT
PROCÉDÉ, SYSTÈME ET PROGRAMME D'APPLICATION SERVANT À ATTRIBUER DES APPAREILS DE TERRAIN INDUSTRIELS DANS UN ENVIRONNEMENT EN NUAGE

(30) Priorität: 06.04.2017 DE 102017205887
(43) Veröffentlichungstag der Anmeldung: 08.01.2020
(73) Patentinhaber: Siemens Aktiengesellschaft, 80333 München (DE)
(72) Erfinder: GATZHAMMER, Bernhard, 81379 München (DE); MITTERMEIER, Ludwig Andreas, 81541 München (DE)
(86) Internationale Anmeldenummer: PCT/EP2018/056420
(87) Internationale Veröffentlichungsnummer: WO 2018/184805

(56) Entgegenhaltungen:
- WO-A1-2015/100109
- DE-A1-102014 108 162
- US-A1- 2015 121 486

## Beschreibung

Verfahren und System zur Verknüpfung eines industriellen Feldgerätes mit einem Benutzer-Account in einer Cloud-Umgebung sowie Anwendungsprogramm für ein mobiles Endgerät zur Verknüpfung Die Erfindung betrifft ein Verfahren zur Verknüpfung eines industriellen Feldgerätes mit einem Benutzer-Account in einer Cloud-Umgebung und ein System zur Verknüpfung eines industriellen Feldgerätes mit einem Benutzer-Account in einer Cloud-Umgebung sowie ein Anwendungsprogramm für ein mobiles Endgerät zur Verknüpfung.

Bisher sind hierzu im Wesentlichen drei Verfahren bekannt:
Im ersten Fall wird das Feldgerät bereits beim Produktionsprozess mit einem eindeutigen benutzerspezifischen Security-Schlüssel ausgestattet. Die Zuordnung ist also schon bei Auslieferung enthalten und damit sehr unflexibel.

Im zweiten Fall erzeugt sich der Benutzer in der Cloud-Umgebung einen eindeutigen benutzerspezifischen Security-Schlüssel, den er beispielsweise mit Hilfe eines USB-Sticks auf das Feldgerät überträgt. Die Zuordnung ist also ebenfalls relativ unflexibel und erfolgt quasi durch eine umständliche manuelle Übertragung des Security-Schlüssels auf das Feldgerät.

Im letzten Fall wird das Feldgerät beim Produktionsprozess mit einem eindeutigen benutzerunspezifischen Security-Schlüssel ausgestattet, was eine größere Flexibilität ermöglicht als die beiden anderen Verfahren. Ein Benutzer in unmittelbarer physikalischer Nähe kann sich diesen benutzerunspezifischen Security-Schlüssel entweder grafisch, z. B. per Display, oder über eine drahtlose Verbindung, z.B. ein vom Feldgerät erzeugtes WLAN, mitteilen lassen und so die Zuordnung erzeugen, was jedoch eine gewisse Unsicherheit darstellt. Der Hauptnachteil dieses Verfahrens besteht jedoch darin, dass industrielle Feldgeräte derzeit oft kein Display, WLAN, oder anderes drahtlose Kommunikationsverfahren zur Verfügung haben und das Verfahren für industrielle Feldgeräte oft nicht geeignet ist.

Aus der US 2015/0121486 A1 ist ein Verfahren zur Authentifizierung einer Applikation bekannt, das in Terminals mit einer "Near-Field-Communication (NFC)"-Funktionalität Anwendung findet. Wenn eine bestimmte Operation der Applikation in dem Terminal ausgelöst wird, wird ein Nahfeldgerät innerhalb einer bestimmten Entfernung des Terminals erkannt. Dadurch erhält man eine Identifizierung des Nahfeldgerätes. Diese Identifizierung wird anschließend an einen Server gesendet, um von dem Server zu erfahren, ob das erkannte Nahfeldgerät ein bestimmtes Nahfeldgerät, das zu der Operation korrespondiert und dementsprechend authentifiziert ist. Mit dem Ergebnis der vom Server aufgrund der Identifikation durchgeführten Authentifizierung wird die Operation in dem Terminal ausgeführt. Auf diese Art und Weise wird die Betriebssicherheit des Anwendungsbetreibers am Terminal gewährleistet.

Aus der WO 2015/100109 A1 ist es bekannt, die Authentifizierung von Geräten in Analyseüberwachungssystemen zu ermöglichen. Das Analyseüberwachungssystem kann ein In-vivo-System sein und es enthält ein Sensorsteuergerät mit einem Sensor und einer Steuerschaltung sowie ein Lesegerät zur Kommunikation mit dem Sensorsteuergerät. Das Analyseüberwachungssystem hat zudem eine gemeinsame Schnittstelle zu einem vertrauenswürdigen Computersystem an einem entfernten Standort. In dem Publikationsdokument werden zahlreiche Authentifizierungstechniken, z.B. mit Hilfe eines privaten Schlüssels, offenbart, die es ermöglichen gefälschte Komponenten, z. B. ein gefälschtes Sensorsteuergerät, zu erkennen.

Die der Erfindung zu Grunde liegende **Aufgabe** besteht nun darin, ein Verfahren und ein System zur Verknüpfung eines industriellen Feldgerätes mit einem Benutzer-Account in einer Cloud-Umgebung sowie ein Anwendungsprogramm für ein mobiles Endgerät zur Verknüpfung anzugeben, bei dem die oben genannten Nachteile möglichst vermieden werden bzw. bei dem eine flexible, kostengünstige und sichere Verknüpfung eines technischen Feldgerätes auf möglichst einfache Weise ermöglicht wird.

Diese Aufgabe wird durch die Merkmale des Patentanspruchs 1 erfindungsgemäß gelöst.

Außerdem wird die Aufgabe durch die Merkmale des Patentanspruchs 5 erfindungsgemäß gelöst.

Weiterhin wird die Aufgabe durch die Merkmale des Patentanspruchs 7 erfindungsgemäß gelöst.

Die weiteren Ansprüche betreffen bevorzugte Ausgestaltungen des erfindungsgemäßen Verfahrens sowie des Systems.

Die Erfindung betrifft im Wesentlichen ein Verfahren zur Zuordnung von industriellen Feldgeräten mit einem Benutzer-Account in einer Cloud-Umgebung mit folgenden Schritten: Anmelden eines Benutzer in der Cloud-Umgebung; Scannen der öffentliche Identitätskennung durch den Benutzer mit Hilfe seines mobilen Endgerätes; prüfen mit Hilfe seines mobilen Endgerätes durch Kontaktaufnahme mit der Cloud-Umgebung ob das Feldgerät bereits mit einem Benutzer-Account verknüpft ist; Verbinden des Feldgerät mit dem Internet durch den Benutzer, sofern noch keine solche Verbindung besteht, derart dass die Cloud-Umgebung durch das Feldgerät kontaktierbar ist; Auslösen einer Verknüpfung des Feldgerätes durch den Benutzer über sein mobiles Endgerät und der vorher gescannten öffentlichen Identitätskennung des Feldgerätes; Authentifizieren des Feldgeräts in der Cloud-Umgebung mit Hilfe seines privaten Security-Schlüssels und Zuordnen des Feld-geräts zur öffentlichen Identitätskennung mit Hilfe der Cloud-Umgebung. Ferner betrifft die Erfindung ein zugehöriges Feldgerät sowie ein entsprechendes Anwendungsprogramm für ein mobiles Endgerät. Durch die Erfindung wird u. a. vorteilhafter Weise eine flexible Neuzuordnung eines Feldgeräts FG zu anderen Benutzern B sowie die Möglichkeit der Neugenerierung der öffentlichen Identitätskennung ID und der Zuordnung zum privaten Security-Schlüssel PK ermöglicht.

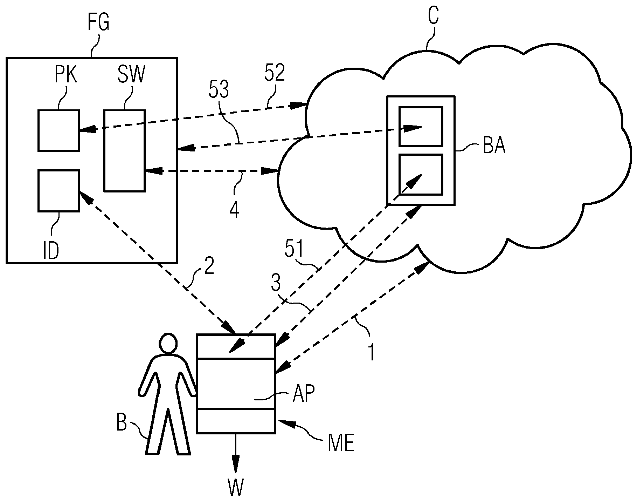

Nachfolgend wird die Erfindung anhand von in der Zeichnung dargestellten Ausführungsbeispielen näher erläutert.

In der Zeichnung ist ein Feldgerät **FG** mit einem eindeutigen benutzerunspezifischen privaten Security-Schlüssel **PK,** mit einer öffentlichen Identitätskennung **ID** und mit einer Software **SW,** ein Benutzer **B** mit einem mobilen Endgerät **ME** sowie eine Cloud-Umgebung **C** mit einem Benutzer-Account **BA** dargestellt. Darüber hinaus sind in der Zeichnung auch die wesentlichen Schritte **1, 2.., 51, 52** und **53** des erfindungsgemäßen Verfahrens in Form von gestrichelten Doppelpfeilen dargestellt.

Erfindungsgemäß geschieht die Zuordnung des Feldgerätes **FG** mit dem Benutzer-Account **BA** in der Cloud-Umgebung **C** mit Hilfe des mobilen Endgerätes **ME** folgendermaßen:
In einem ersten Schritt **1** meldet sich der Benutzer **B** in der Cloud-Umgebung **C** an.

In einem zweiten Schritt **2** scannt der Benutzer **B** die öffentliche Identitätskennung **ID** mit Hilfe seines mobilen Endgerätes **ME.** Dies kann z.B. mit Hilfe von NFC (near field communication), durch Erfassen eines QR-Codes mit einer Kamera oder per Bluetooth erfolgen.

In einem dritten Schritt **3** prüft das mobile Endgerät **ME** durch Kontaktaufnahme mit der Cloud-Umgebung **C** ob das Feldgerät **FG** bereits mit einem Benutzeraccount **BA** verknüpft ist und gibt in so einem Fall eine entsprechende Warnung **W** aus.

In einem vierten Schritt **4** verbindet der Benutzer **B** das Feldgerät **FG** mit dem Internet, so dass es Kontakt mit der Cloud-Umgebung **C** aufnehmen kann.

In einem fünften Schritt **51** stößt der Benutzer **B** über sein mobiles Endgerät **ME** und der vorher gescannten öffentlichen Identitätskennung **ID** des Feldgerätes **FG** dessen Verknüpfung an.

Das Feldgerät **FG** verwendet in einem vorletzten Schritt **52** seinen privaten Security-Schlüssel zur Authentifizierung in der Cloud-Umgebung, die dann in einem letzten Schritt **53** die Verknüpfung durch die Zuordnung mit der öffentlichen Identitätskennung **ID** abschließt.

Das Feldgerät **FG** wird hierzu bereits beim Produktionsprozess sowohl mit einem eindeutigen benutzerunspezifischen privaten Security-Schlüssel **PK** als auch einer öffentlichen Identitätskennung **ID** ausgestattet, wobei die öffentliche Identitätskennung **ID** nur bei physikalischer Nähe ausgelesen werden kann. In unmittelbarer Nähe zu einem Feldgerät ist hiermit eine einfache Zuordnung eines Benutzers B zu diesem Feldgerät **FG** über ein mobiles Endgerät mit drahtlosen Mechanismen möglich, wobei das Feldgerät dazu selbst keine zusätzlichen technischen Mechanismen, wie ein Display, WLAN, etc. benötigt.

Beim erfindungsgemäßen Verfahren wird die Sicherheit durch den zusätzlichen privaten Security-Schlüssel **PK** erhöht. Der private Security-Schlüssel **PK** kann dabei nur von der Software **SW** auf dem technischen Feldgerät **FG** einfach ausgelesen werden, welche die Verbindung mit der Cloud-Umgebung **C** aufnimmt, wobei die Cloud-Umgebung **C** einen entsprechenden berechtigten Benutzer-/Tenant-Account aufweist.

Die eindeutige benutzerunspezifischen öffentlichen Identitätskennung **ID** kann hingegen vom Benutzer **B** einfach mit Hilfe eines mobilen Endgerätes **ME** ausgelesen werden, wobei sich der Benutzer **B** hierzu in unmittelbarer Nähe des Feldgerätes **FG** befinden muss.

Die Identitätskennung **ID** kann z.B. in Form von QR-Code-/NFC-Aufklebern zur Verfügung gestellt werden.

Die Paarung des privaten Security-Schlüssels **PK** mit der öffentlichen Identitätskennung **ID** ist der Cloud-Umgebung **C** bekannt.

## Patentansprüche

1. Verfahren zur Verknüpfung eines industriellen Feldgerätes (FG) mit einem Benutzer-Account (BA) in einer Cloud-Umgebung (C), wobei das industrielle Feldgerät beim Produktionsprozess sowohl mit einem eindeutigen benutzerunspezifischen privaten Security-Schlüssel als auch einer öffentlichen Identitätskennung ausgestattet wird, mit folgenden Schritten:
- (1) Anmelden eines Benutzers (B) in der Cloud-Umgebung (C),
- (2) scannen der öffentlichen Identitätskennung (ID) des Feldgerätes (FG) durch den Benutzer (B) mit Hilfe eines mobilen Endgerätes (ME) des Benutzers (B),
- (3) prüfen mit Hilfe des mobilen Endgerätes (ME) durch Kontaktaufnahme mit der Cloud-Umgebung (C), ob das Feldgerät (FG) bereits mit dem Benutzer-Account (BA) verknüpft ist,
- (4) verbinden des Feldgerätes (FG) mit dem Internet, sofern noch keine Verbindung mit dem Internet besteht, durch den Benutzer (B) derart, dass die Cloud-Umgebung (C) durch das Feldgerät kontaktierbar ist,
- (51) anstoßen einer Verknüpfung des Feldgerätes (FG) durch den Benutzer (B) über das mobile Endgerät (ME) und der vorher gescannten öffentlichen Identitätskennung (ID) des Feldgerätes (FG),
- (52) authentifizieren des Feldgeräts (FG) in der Cloud-Umgebung (C) mit Hilfe des benutzerunspezifischen privaten Security-Schlüssels (PK) des Feldgeräts (FG) und
- (53) abschließen der Verknüpfung des Feldgeräts (FG) mit Hilfe der Cloud-Umgebung (C) durch die Zuordnung mit der öffentlichen Identitätskennung (ID).

2. Verfahren nach Anspruch 1, bei dem das Scannen (2) der öffentlichen Identitätskennung (ID) durch Erfassen eines "Quick Response <QR>"-Codes mit einer Kamera erfolgt.

3. Verfahren nach Anspruch 1, bei dem das Scannen (2) der öffentlichen Identitätskennung (ID) per Bluetooth erfolgt.

4. Verfahren nach Anspruch 1 bis 3, bei dem, sofern die Prüfung (3) ergibt, dass das Feldgerät (FG) bereits mit einem Benutzer-Account (BA) verknüpft ist, vom mobilen Endgerät (ME) eine entsprechende Warnung (W) ausgegeben wird.

5. System zur Verknüpfung eines industriellen Feldgerätes (FG) mit einem Benutzer-Account (BA) in einer Cloud-Umgebung (C), mit folgenden Systemkomponenten:
- dem Feldgerät (FG), das im Produktionsprozess mit einer öffentlichen Identitätskennung (ID) und einem benutzerunspezifischen privaten Security-Schlüssel (PK) ausgestattet ist,
- der Cloud-Umgebung (C) mit dem Benutzer-Account (BA) und
- einem mobilen Endgerät (ME) des Benutzers (B) mit einem Anwendungsprogramm (AP), wobei die genannten Systemkomponenten das Verfahren nach einem der vorhergehenden Ansprüche durchführen.

6. System nach Anspruch 5, bei dem das Feldgerät (FG) die Identitätskennung (ID) in Form eines Aufklebers aufweist.

7. Anwendungsprogramm (AP) für ein mobiles Endgerät (ME) zur Verknüpfung eines industriellen, durch Ausstattung im Produktionsprozess eine öffentliche Identitätskennung (ID) und einen benutzerunspezifischen privaten Security-Schlüssel (PK) enthaltenden Feldgerätes (FG) mit einem Benutzer-Account (BA) in einer Cloud-Umgebung (C), das, wenn seine Programmteile auf dem mobilen Endgerät ausgeführt werden, alle die Verfahrensschritte des Anspruchs 1 ausführt.

## Claims

1. Method for linking an industrial field device (FG) to a user account (BA) in a cloud environment (C), wherein the industrial field device is equipped both with a unique user-non-specific private security key and with a public identifier in the production process, having the following steps:
- (1) registering a user (B) in the cloud environment (C),
- (2) the user (B) scanning the public identifier (ID) of the field device (FG) using a mobile terminal (ME) of the user (B),
- (3) checking, by way of the mobile terminal (ME) by establishing contact with the cloud environment (C), whether the field device (FG) is already linked to the user account (BA),
- (4) the user (B) connecting the field device (FG) to the Internet provided that no connection to the Internet yet exists, such that the cloud environment (C) is able to be contacted by the field device,
- (51) the user (B) triggering linking of the field device (FG) using the mobile terminal (ME) and the previously scanned public identifier (ID) of the field device (FG),
- (52) authenticating the field device (FG) in the cloud environment (C) using the user-non-specific private security key (PK) of the field device (FG) and
- (53) completing the linking of the field device (FG) using the cloud environment (C) through the assignment to the public identifier (ID).

2. Method according to Claim 1,
in which the public identifier (ID) is scanned (2) by capturing a Quick Response QR code using a camera.

3. Method according to Claim 1,
in which the public identifier (ID) is scanned (2) via Bluetooth.

4. Method according to Claim 1 to 3,
in which, if the check (3) reveals that the field device (FG) is already linked to a user account (BA), a corresponding warning (W) is output by the mobile terminal (ME).

5. System for linking an industrial field device (FG) to a user account (BA) in a cloud environment (C), having the following system components:
- the field device (FG), which is equipped with a public identifier (ID) and a user-non-specific private security key (PK) in the production process,
- the cloud environment (C) with the user account (BA) and
- a mobile terminal (ME) of the user (B) with an application program (AP), wherein said system components perform the method according to one of the preceding claims.

6. System according to Claim 5,
in which the field device (FG) has the identifier (ID) in the form of a sticker.

7. Application program (AP) for a mobile terminal (ME) for linking a field device (FG), containing a public identifier (ID) and a user-non-specific private security key (PK) by being equipped therewith in the production process, to a user account (BA) in a cloud environment (C), which application program carries out all of the method steps of Claim 1 when its program segments are executed on the mobile terminal.

## Revendications

1. Procédé pour la liaison d'un appareil de terrain industriel (FG) avec un compte utilisateur (BA) dans un environnement en nuage (C), dans lequel l'appareil de terrain industriel lors du processus de production est doté non seulement d'une unique clé de sécurité privée non spécifique à un utilisateur mais aussi d'un code d'identité public, avec les étapes suivantes :
- (1) connecter un utilisateur (B) dans l'environnement en nuage (C)
- (2) faire scanner le code d'identité public (ID) de l'appareil de terrain (FG) par l'utilisateur (B) à l'aide d'un appareil terminal mobile (ME) de l'utilisateur (B),
- (3) vérifier à l'aide de l'appareil terminal mobile (ME) par prise de contact avec l'environnement en nuage (C), si l'appareil de terrain (FG) est déjà lié au compte utilisateur (BA),
- (4) relier l'appareil de terrain (FG) à Internet, dans la mesure où aucune liaison à Internet n'existe encore, par l'utilisateur (B) de sorte que l'environnement en nuage (C) peut être mis en contact par l'appareil de terrain,
- (51) déclencher une liaison de l'appareil de terrain (FG) par l'utilisateur (B) via l'appareil terminal mobile (ME) et du code d'identité public (ID), déjà scanné, de l'appareil de terrain (FG),
- (52) authentifier l'appareil de terrain (FG) dans l'environnement en nuage (C) à l'aide de la clé de sécurité privée (PK), non spécifique à l'utilisateur, de l'appareil de terrain (FG) et
- (53) clore la liaison de l'appareil de terrain (FG) à l'aide de l'environnement en nuage (C) par l'attribution du code d'identité public (ID).

2. Procédé selon la revendication 1, dans lequel a lieu le scan (2) du code d'identité public (ID) par saisie d'un code « Quick Response <QR> » avec un appareil de prise de vue.

3. Procédé selon la revendication 1, dans lequel le scan (2) du code d'identité public (ID) a lieu par Bluetooth.

4. Procédé selon la revendication 1 à 3, dans lequel, dans la mesure où la vérification (3) montre que l'appareil de terrain (FG) est déjà lié à un compte utilisateur (BA), un avertissement correspondant (W) est délivré par l'appareil terminal mobile (ME) .

5. Système pour la liaison d'un appareil de terrain industriel (FG) avec un compte utilisateur (BA) dans un environnement en nuage (C), avec les composants de système suivants :
- l'appareil de terrain (FG) qui est doté dans le processus de production d'un code d'identité public (ID) et d'une unique clé de sécurité privée (PK), non spécifique à un utilisateur,
- l'environnement en nuage (C) avec le compte utilisateur (BA) et
- un appareil terminal mobile (ME) de l'utilisateur (B) avec un programme d'application (AP), dans lequel les composants de système cités exécutent le procédé selon l'une des revendications précédentes.

6. Système selon la revendication 5, dans lequel l'appareil de terrain (FG) présente le code d'identité (ID) sous forme d'une étiquette adhésive.

7. Programme d'application (AP) pour un appareil terminal mobile (ME) pour la liaison d'un appareil de terrain industriel (FG) comportant, par attribution lors du processus de production, un code d'identité public (ID) et une clé de sécurité privée (PK) non spécifique à l'utilisateur, avec un compte utilisateur (BA) dans un environnement en nuage (C),
qui, lorsque ses parties de programme sont exécutées sur l'appareil terminal mobile, réalise toutes les étapes de procédé de la revendication 1.
